Europäisches Patentamt

**European Patent Office**

Office européen des brevets

(11) Publication number: **0 260 952**
**A2**

(12) # EUROPEAN PATENT APPLICATION

(21) Application number: **87308197.0**

(22) Date of filing: **16.09.87**

(51) Int. Cl.⁴: **C 09 C 1/00**

(30) Priority: **19.09.86 GB 8622570**

(43) Date of publication of application:
**23.03.88 Bulletin 88/12**

(84) Designated Contracting States:
**DE ES FR GB IT NL**

(71) Applicant: **COOKSON GROUP plc**
**14 Gresham Street**
**London EC2V 7AT (GB)**

(72) Inventor: **Olby, John Kenneth**
**187 Wembley Hill Road**
**Wembley Middlesex, HA9 8EL (GB)**

(74) Representative: **Allard, Susan Joyce et al**
**BOULT, WADE & TENNANT 27 Furnival Street**
**London EC4A 1PQ (GB)**

(54) **A process for the preparation of pigments.**

(57) A process for the preparation of pigments which are protected by the inclusion of the pigment in zirconium silicate (zircon) in which all of the components of the protected pigment, except for the mineraliser, are simultaneously co-precipitated together.

EP 0 260 952 A2

**Description**

## A PROCESS FOR THE PREPARATION OF PIGMENTS

The present invention relates to a process for the preparation of protected pigments which are particularly useful for firing on ceramic materials, and to a protected pigment produced by this method.

It is known to improve the stability of sensitive pigments by protecting the pigment by inclusion of the pigment in zirconium silicate (zircon). These protected pigments are sometimes referred to as inclusion pigments. Examples of such protected pigments are zirconium silicate/cadmium sulphide yellow, zirconium silicate/cadmium sulphide/selenide orange, zirconium silicate/cadmium sulphide/selenide red, zirconium silicate/vanadium sulphide grey and zirconium silicate/molybdenum sulphide grey/green.

British Patent No. 1403470 describes certain protected pigments and a method for their preparation which comprises mixing together pigment, zirconium oxide and silicon dioxide with water, calcining the resulting mass at a high temperature, followed by grinding and the removal of unwanted reaction products.

British Patent No. 2106530B describes a method of making a protected pigment by the inclusion of the pigment in transparent zirconium silicate crystals, comprising precipitating simultaneously from solutions of their salts a pigment and a zirconium compound, thereafter in the presence of this precipitate precipitating a silicon compound from a solution of its salts, mixing the resulting precipitate with a fluoride and firing the mixture. This process gives clean bright pigments but is complicated and tedious to perform.

We have now found that protected pigments can be prepared by a simplified process in which all of the components of the protected pigment, except for the mineraliser, are simultaneously co-precipitated together.

Accordingly the present invention provides a process for the preparation of a protected pigment by the inclusion of the pigment in zirconium silicate, which process comprises the steps of

(i) mixing together

(a) a solution containing at least one soluble salt of zirconium, at least one soluble salt of aluminium and at least one soluble salt to provide the cations of the chosen pigment, the aluminium being present in an amount expressed as Al of from 0.005 to 0.1 percent by weight based on the weight of zirconium as Zr present in the solution, and

(b) a solution containing at least one soluble silicon compound, at least one monoamine, diamine or quaternary ammonium or phosphonium salt and at least one soluble compound to provide the anions of the chosen pigment, the molar proportions of the monoamine or diamine being in the range of from 0.003 to 0.3 moles per gram atom of silicon as Si present in the solution and the molar proportion of the quaternary ammonium or phosphonium compound being in the range of from 0.0005 to 0.05 moles per gram atom of silicon as Si present in the solution.

(ii) co-precipitating the chosen pigment, zirconium oxide and silica from the mixed solutions at an alkaline pH,

(iii) mixing the resulting precipitate with a fluoride; and

(iv) firing the mixture.

The salt of zirconium which is incorporated into solution (a) may be any soluble salt of zirconium, such as zirconium acetate, zirconyl chloride or zirconium sulphate.

The salt of aluminium which is incorporated into solution (a) may be provided at least in part by the impurities present in the zirconium salt. Alternatively, or in addition, an aluminium salt may be incorporated into solution (a). Preferred aluminium salts are aluminium chloride or aluminium sulphate. Furthermore, the aluminium salt may be formed in situ for example by the addition of hydrated alumina to an acidified solution of the zirconium salt. Preferably, the aluminium is present in solution (a) in an amount of from 0.02 to 0.04 percent by weight based on the weight of the zirconium.

The silicon compound which is incorporated into solution (b) may be any soluble silicon compound such as sodium silicate, potassium silicate or lithium silicate.

The monoamine or diamine which is incorporated into solution (b) is preferably a primary amine, pentane diamine, hexane diamine or ethylene diamine. The monoamine or diamine is preferably used in an amount in the range of from 0.01 to 0.1 moles per gram atom of silicon as Si present in the solution.

When a quaternary ammonium or phosphonium salt is incorporated into solution (b) instead of a monoamine or diamine it is preferably used in an amount in the range of from 0.001 to 0.01 moles per gram atom of silicon as Si present in the solution. Preferred quaternary ammonium salts are the tetrapropyl ammonium, tetrabutyl ammonium or cetyl trimethyl ammonium salts.

The co-precipitation is carried out at a alkaline pH, preferably at a pH in the range of from 9.0 to 11.0, more preferably at a pH of about 10.0. The alkaline conditions required for the co-precipitation may be achieved by including sodium hydroxide or potassium hydroxide in solution (b). The pH of mixing may be adjusted by adding small proportions of sodium hydroxide or potassium hydroxide to solution (b) or alternatively small proportions of acid e.g. sulphuric, hydrochloric or acetic acid to solution (a).

The fluoride which is mixed with the precipitate in step (iii) of the method is preferably a metallic fluoride, such as a fluoride or mixed fluoride of aluminium, lithium, lead, potassium, calcium or sodium. The fluoride is generally mixed with the precipitate in an amount of from 1 to 5% by weight based on the weight of the precipitate, more preferably in an amount of about 3% by weight.

In step (iv) of the process of the invention the mixture of the precipitate and fluoride is fired. The firing is preferably carried out at a temperature in the range of from 1000° to 1300°C, although it will be understood by those skilled in the art that the temperature at which the mixture is fired will depend upon the nature of the pigment which is contained therein. The fired product is then milled, treated with acid to remove undesired reaction products and unprotected pigment, and finally dried.

The present invention will be further described with reference to the following Examples.

EXAMPLE 1

The following solutions were made up:-
a) 58g $3CdSO_4.8H_2O$
175ml zirconyl acetate solution density 1.303 containing 22% $ZrO_2$
0.15g $Al_2(SO_4)_3.16H_2O$
were mixed and made up to 3 litres.
b) 80ml of potassium silicate solution density 1.33
7.2g selenium
48g potassium hydroxide
0.4g ethylene diamine
100ml $K_2S$ solution containing 25g $K_2S$
were mixed and made up to 3 litres.

Co-precipitation was carried out at a constant pH of 10.0. The product was diluted to 20 litres, neutralised to pH 7 with acetic acid then washed until free of sulphate. It was then dried at 130°C, milled, mixed with 3% lithium fluoride and fired for 20 minutes at 1050°C. The stain was milled, leached with a mixture of hot nitric and sulphuric acids, washed and dried. At a concentration of 10% by weight in a transparent glaze maturing at 1200°C it gave a deep clean red colour.

The aluminium content of the zirconyl acetate solution used was less than 0.007% of the zirconium content.

EXAMPLE 2

The following solutions were made up:-
a) 58g $3CdSO_4.8H_2O$
175ml zirconyl acetate solution density 1.303 containing 22% $ZrO_2$
7.5ml of a 1% solution of $Al_2(SO_4)_3.16H_2O$ in water.
these components were mixed and made up to 3 litres with water.
b) 65g $Na_2S.nH_2O$ (28% $Na_2S$)
7.2g selenium
65 ml sodium silicate density 1.375
30g sodium hydroxide
0.4g ethylene diamine
were mixed and made up to 3 litres with water.

Co-precipitation was carried out at a constant pH of 9.7. The product was diluted to 20 litres, washed twice by decantation, neutralised to pH7 with acetic acid and washed until sulphate free. It was then filtered and dried at 130°C, milled, mixed with 3% lithium fluoride and fired for 20 minutes at 1050°C. The stain was milled and leached as in Example 1 and tested at a concentration of 10% by weight in a transparent glaze maturing at 1200°C, in which it gave an intense red colour of slightly brown tone.

The aluminium content of the zirconyl acetate solution used was less than 0.007% of the zirconium content.

EXAMPLE 3

The following solutions were made up:-
a) 58g $3CdSO_4.8H_2O$
175ml of zirconyl acetate solution density 1.303 containing 22% $ZrO_2$
0.15g $Al_2(SO_4)_3.16H_2O$
were mixed and made up to 3 litres with water.
b) 42g $K_2S_{1.48}.nH_2O$ (41.7%K,25.25% S)
80ml potassium silicate density 1.33
48g potassium hydroxide
0.4g ethylene diamine
were mixed and made up to 3 litres with water.

Co-precipitation was carried out at a constant pH of 10.1. The product was processed through to the final stain as in Example 2. In a transparent glaze at a concentration of 10% by weight it gave an intense clean yellow colour.

The aluminium content of the zirconyl acetate solution used was less than 0.007% of the zirconium content.

EXAMPLE 4

The following solutions were made up:-
a) 130.4g $ZrOCl_28H_2O$
54ml concentrated hydrochloric acid
58g $3CdSO_48H_2O$
0.15g $Al_2(SO_4)_316H_2O$
were mixed and made up to 3 litres with water.
b) 80ml potassium silicate D1.33
7.2g selenium
48g potassium hydroxide
42g $K_2S_{1.48}nH_2O$ (41.7%K, 25.25%S)
were mixed and made up to 3 litres with water.

Co-precipitation was carried out at a constant pH of 9.5. The product was processed through to the final stain as in Example 2. In a transparent glaze at a concentration of 10% by weight it gave an intense clean red colour.

EXAMPLE 5

The following solutions were made up:-
a) 58g $3CdSO_48H_2O$
175ml of zirconyl acetate solution density 1.303 containing 22% $ZrO_2$
0.15g $Al_2(SO_4)_3 16H_2O$
were mixed and made up to 3 litres with water.
b) 65g $Na_2S.nH_2O$ (28% $Na_2S$)
7.2g selenium
80ml potassium silicate D1.33
35g potassium hydroxide
0.8g cetyl trimethyl ammonium bromide
were mixed and made up to 3 litres with water.

Co-precipitation was carried out at a constant pH of 9.5. The product was processed through to the final stain as in Example 2. In a transparent glaze at a concentration of 10% by weight it gave a strong clean red colour.

EXAMPLE 6

The procedure of Example 5 was repeated, except that the formulation of solution b) was as follows:-

b) 65g $Na_2S.nH_2O$ (28% NaS)
7.2g selenium
80ml potassium silicate D1.33
45g potassium hydroxide
0.4g tetrabutyl phosphonium bromide

The product was processed through to the final stain as in Example 2. In a transparent glaze at a concentration of 10% by weight it gave a medium intensity red colour.

**Claims**

1. A process for the preparation of a protected pigment by the inclusion of the pigment in zirconium silicate, which process comprises the steps of

(i) mixing together

(a) a solution containing at least one soluble salt of zirconium, at least one soluble salt of aluminium and at least one soluble salt to provide the cations of the chosen pigment, the aluminium being present in an amount expressed as Al of from 0.005 to 0.1 percent by weight based on the weight of zirconium as Zr present in the solution, and

(b) a solution containing at least one soluble silicon compound, at least one monoamine, diamine or quaternary ammonium or phosphonium salt and at least one soluble compound to provide the anions of the chosen pigment, the molar proportions of the monamine or diamine being in the range of from 0.003 to 0.3 moles per gram atom of silicon as Si present in the solution and the molar proportion of the quaternary ammonium or phosphonium compound being in the range of from 0.0005 to 0.05 moles per gram atom of silicon as Si present in the solution.

(ii) co-precipitating the chosen pigment, zirconium oxide and silica from the mixed solutions at an alkaline pH,

(iii) mixing the resulting precipitate with a fluoride; and

(iv) firing the mixture.

2. A process as claimed in claim 1 wherein the soluble salt of zirconium in solution (a) is zirconium acetate, zirconyl chloride or zirconium sulphate.

3. A process as claimed in claim 1 or claim 2 wherein the soluble salt of aluminium in solution (a) is aluminium chloride or aluminium sulphate.

4. A process as claimed in claim 1 or claim 2 wherein the aluminium salt is formed in situ in solution (a) by the addition of hydrated alumina to an acidified solution of the zirconium salt.

5. A process as claimed in claim 1 or claim 2 wherein at least a part of the aluminium salt in solution (a) is present as an impurity in the zirconium salt.

6. A process as claimed in any one of the preceding claims wherein the aluminium in solution (a) is present in an amount of from 0.02 to 0.04 percent by weight based on the weight of zirconium.

7. A process as claimed in any one of the preceding claims wherein the soluble silicon compound in solution (b) is sodium silicate, potassium silicate or lithium silicate.

8. A process as claimed in any one of the preceding claims wherein the monoamine or diamine is present in solution (b) in a molar proportion in the range of from 0.01 to 0.1 moles per gram atom of silicon as Si present in the solution.

9. A process as claimed in any one of the preceeding claims wherein the diamine present in solution (b) is pentane diamine, hexane diamine or ethylene diamine.

10. A process as claimed in any one of claims 1 to 7 wherein the quaternary ammonium or phosphonium salt is present in solution (b) in a molar proportion in the range of from 0.001 to 0.01 moles per gram atom of silicon as Si present in the solution.

11. A process as claimed in any one of claims 1 to 7, or claim 10 wherein the quaternary ammonium salt is a tetrapropyl ammonium, tetrabutyl ammonium or cetyl trimethyl ammonium salt.

12. A process as claimed in any one of claims 1 to 7, or claim 10 wherein the quaternary phosphonium salt is a tetrabutyl phosphonium salt.

13. A process as claimed in any one of the preceding claims wherein the co-precipitation is carried out at a pH in the range of from 9 to 11.

14. A process as claimed in claim 13 wherein the alkaline pH is provided by the inclusion of sodium hydroxide or potassium hydroxide in solution (b).

15. A process as claimed in any one of the preceding claims wherein in step (iii) the precipitate is mixed with a fluoride or mixed fluoride of aluminium, lead, potassium, calcium or sodium.

16. A process as claimed in claim 15 wherein the fluoride is used in an amount of from 1 to 5% by weight based on the weight of the precipitate.

17. A process as claimed in any one of the preceding claims wherein the mixture from step (iii) is fired at a temperature in the range of from 1000° to 1300°C.